# EUROPÄISCHE PATENTSCHRIFT

(11) **EP 1 903 979 B1**
(45) Veröffentlichungstag und Bekanntmachung des Hinweises auf die Patenterteilung: **02.11.2016**
(21) Anmeldenummer: 06777804.3
(22) Anmeldetag: 17.07.2006
(51) Int. Cl.: A61C 13/00

(54) **VERFAHREN UND VORRICHTUNG ZUR HERSTELLUNG VON ZAHNERSATZTEILEN**
METHOD AND DEVICE FOR PRODUCING DENTAL PROSTHESIS ELEMENTS
PROCEDE ET DISPOSITIF DE FABRICATION DE PROTHESES DENTAIRES

(30) Priorität: 15.07.2005 DE 102005033738
(43) Veröffentlichungstag der Anmeldung: 02.04.2008
(73) Patentinhaber: Sirona Dental Systems GmbH, 64625 Bensheim (DE)
(72) Erfinder: PFEIFFER, Joachim, 64625 Bensheim (DE)
(74) Vertreter: Sommer, Peter
(86) Internationale Anmeldenummer: PCT/EP2006/064303
(87) Internationale Veröffentlichungsnummer: WO 2007/009964

(56) Entgegenhaltungen:
- EP-A- 1 438 926
- WO-A-03/062740
- WO-A-2004/084757
- DE-A1- 19 714 526
- DE-B3- 10 310 751
- US-A1- 2005 070 782

## Beschreibung

Die Erfindung betrifft ein Verfahren zur Herstellung eines Zahnersatzteils, bei dem das Zahnersatzteil manuell bearbeitet wird.

Die Erfindung betrifft weiterhin ein Verfahren zur Herstellung eines Zahnersatzteils, wobei das Zahnersatzteil ein Gerüst und einen Aufbau umfasst.

Darüber hinaus betrifft die Erfindung Vorrichtungen zur teilweise manuellen Bearbeitung eines Zahnersatzteils.

### Stand der Technik

Im Stand der Technik sind Verfahren zur Herstellung von Zahnersatzteilen bekannt, die in unterschiedlichem Umfang computergestützte Konstruktions- und Fertigungsverfahren einsetzen.

Ältere bekannte Verfahren verzichten vollständig auf den Einsatz von Computern. Dabei wird meist ein Abdruck der Zahnsituation des Patientenmundes sowohl von der zu behandelnden als auch von der gegenüberliegenden Kieferseite genommen. Auf der Grundlage dieses Abdrucks wird ein Positivmodell hergestellt, auf dem ein Zahntechniker das Zahnersatzteil in mehreren Schichten fertigt. Meist wird dabei zuerst ein hochfestes Gerüst erzeugt, auf das anschließend mehrere Porzellan- oder Keramikschichten aufgebracht werden. Die Okklusion wird mittels eines Artikulators überprüft, so dass das Zahnersatzteil sich möglichst gut in den Patientenmund einfügt.

Nachteilig ist, dass einerseits die Anlageflächen höchstens so genau sind wie das Situationsmodell, welches durch die Abdrucknahme und den Austrocknungsprozess des Modells keine gute Maßhaltigkeit aufweist und dass andererseits die Okklusion nur mit Hilfe des mechanischen Artikulators überprüft werden kann, womit eine einwandfreie Funktionstüchtigkeit des Zahnersatzteils stark von den Fähigkeiten des Zahntechnikers abhängt.

Darüber hinaus sind Verfahren bekannt, die vollständig ohne Mitwirken eines Zahntechnikers auskommen. Dabei wird die Zahnsituation im Patientenmund oder anhand eines Abdrucks mittels einer dreidimensionalen Vermessungseinrichtung vermessen. Meist findet diese Vermessung optisch statt. Die Vermessungsdaten bilden dann die Grundlage für eine computergestützte Konstruktion des Zahnersatzteils, welches anschließend mit computergestützten Fertigungsverfahren hergestellt wird. Als Fertigungsverfahren sind abtragende Verfahren bekannt, die endfeste oder nichtendfeste Rohlinge mittels computergesteuerten Fräs- und Schleifeinrichtungen bearbeiten. Nicht endfeste Rohlinge werden durch Sintern oder Infiltration auf Ihre Endfestigkeit gebracht. Darüber hinaus ist bekannt, dass Zahnersatzteile mittels Lasersintern oder 3D-Drucken erzeugt werden können.

Nachteilig bei den vollautomatischen Fertigungsverfahren ist, dass die Zahnersatzteile die ästhetischen Ansprüche nur unvollständig erfüllen, da ein natürlicher Zahn komplexe optische Eigenschaften aufweist, die aus seinem mehrschichtigen Aufbau resultieren. Diese Eigenschaften können durch einen einschichtigen Aufbau mit Keramiken nur unvollständig nachgebildet werden.

Darüber hinaus sind Verfahren bekannt, die eine manuelle Fertigung des Zahnersatzteils mit der automatischen Fertigung von Teilen des Zahnersatzteils verbinden.

Die DE 101 31 131 A1 offenbart ein Verfahren zur Herstellung einer dentalen Prothese einzelner Zähne oder Zahngruppen, wobei intraoral räumliche Informationen des die Prothese aufnehmenden Zahnstumpfes oder Implantates angefertigt werden und mit Hilfe dieser Informationen ein Modell des Kiefers beziehungsweise Kieferabschnitts angefertigt wird. Weiterhin wird mittels CAD/CAM-Methoden ein der Zahnsituation angepasstes Gerüst erzeugt, auf dem von einem Zahntechniker manuell eine Verblendung aus Keramik aufgebracht wird.

Nachteilig ist hierbei, dass der Aufwand zur Herstellung eines Modells ausgehend von digitalen Daten sehr groß ist.

Die DE 197 14 526 A1 offenbart ein dentales Kontrollsystem zum Beurteilen der Präparation von Zähnen, Zahnrestaurationen und Zahnersatz, mit einer Messeinrichtung, die einen präparierten Zahn, eine Zahnrestauration oder einen Zahnersatz vermisst und entsprechende Messinformationen erzeugt, und mit einer Auswertungseinrichtung, die mit der Messeinrichtung verbunden ist und anhand von vorgegebenen Kontrollinformationen sowie den von der Messeinrichtung gelieferten Messinformationen den präparierten Zahn, die Zahnrestauration oder den Zahnersatz beurteilt und entsprechende Beurteilungsinformationen erzeugt und ausgibt.

Die EP 1 438 926 A1 offenbart ein Verfahren zur Herstellung eines Dentalproduktes, insbesondere einer Dentalrestauration, mit den Schritten: Präparation durch den Zahnarzt; Herstellung einer Abformung und gegebenenfalls eines Modells der Abformung, gegebenenfalls nach Versendung an ein Dentallabor; Scannen der Abformung oder des Modells; Erzeugen eines Auftragsdatenpaketes, gegebenenfalls als virtuellen Restauration, basierend auf dem Scanergebnis; Versenden an ein Bearbeitungszentrum; Umwandlung der Auftragsdaten des Auftragsdatenpakets in Steuerdaten für die maschinelle Bearbeitung; Senden der Steuerdaten an eine Bearbeitungsmaschine; Erstellen des Dentalproduktes, insbesondere der Dentalrestauration; Versenden der Restauration an das Dentallabor oder den Zahnarzt; Prüfen der Restauration auf Passung auf dem Modell; Fertigstellen der Restauration, gegebenenfalls durch farbliche Anpassung oder Verblendung; gegebenenfalls Versenden der Restauration an den Zahnarzt; Prüfen der Restauration auf Ausführung, Passung und Ästhetik und Einsetzen der Restauration; dadurch gekennzeichnet, dass nach der Herstellung des Dentalprodukts und vor dem Versenden des Dentalprodukts die folgenden Verfahrensschritte durchgeführt werden: Erzeugung eines Datenpakets des Dentalproduktes im Datenformat der Auftragsdaten; Durchführung eines Datenvergleichs zwischen den Auftragsdaten und dem Datenpaket des Dentalprodukts.

Die Aufgabe der vorliegenden Erfindung besteht daher darin, Verfahren und Vorrichtungen zu Herstellung von Zahnersatzteilen anzugeben, die eine kostengünstige, präzise und ästhetisch einwandfreie Herstellung eines Zahnersatzteils ermöglicht.

### Darstellung der Erfindung

Diese Aufgabe wird gelöst durch die Verfahren gemäß der kennzeichnenden Merkmale der Ansprüche 1 und 9 sowie mit Vorrichtungen gemäß der kennzeichnenden Merkmale der Ansprüche 13 und 19.

Das Verfahren zur Herstellung eines Zahnersatzteils, bei dem das Zahnersatzteil manuell bearbeitet wird, sieht vor, dass Konstruktionsdaten des herzustellenden Zahnersatzteils vorliegen, wobei nach einem Bearbeitungsschritt zur Herstellung des Zahnersatzteils mit einer dreidimensionalen Vermessungseinrichtung Vermessungsdaten des bearbeiteten herzustellenden Zahnersatzteils aufgenommen und zusammen mit den Konstruktionsdaten auf einer Anzeige dargestellt werden.

Der Vorteil dieses Verfahrens ist, dass der Zahntechniker einerseits die volle ästhetische Kontrolle über die Herstellung des Zahnersatzteils behält und andererseits durch den Abgleich mit einer digitalen Konstruktion die Sicherheit behält, ein hochwertiges und passgenaues Zahnersatzteil kostengünstig zu fertigen. Darüber hinaus benötigt er außer den Konstruktionsdaten keine weiteren Modelle der Zahnsituation.

Das Verfahren eignet sich zur Herstellung sämtlicher Arten von Zahnersatzteilen, beispielsweise Kronen, Brücken, Veneers, Implantaten und dergleichen und ist insbesondere für die Herstellung solcher Zahnersatzteile von Vorteil, die eine bei geöffnetem Mund sichtbare Oberfläche aufweisen und bei denen daher ein hoher Anspruch an die Ästhetik gestellt wird.

Vorteilhafterweise werden die Vermessungsdaten und die Konstruktionsdaten miteinander in Beziehung gesetzt und auf der Anzeige Unterschiede zwischen den Vermessungsdaten und den Konstruktionsdaten angezeigt. Dies erleichtert den Abgleich mit den Konstruktionsdaten.

Erfindungsgemäß werden bei der Konstruktion des Zahnersatzteils Anlagepunkte oder -flächen, insbesondere eine Innenfläche, vorgesehen, die ein eindeutiges Positionieren des Zahnersatzteils in einer Haltevorrichtung einer Vermessungseinrichtung ermöglichen, wobei die Haltevorrichtung vorzugsweise eine an die Innenfläche des Zahnersatzteils angepasste Anlagefläche aufweist. Dies ermöglicht die Vermessung des Zahnersatzteils aus einer durch die Lage der Anlagepunkte oder -flächen bestimmten immer gleichen Position heraus. Dazu eignet sich die Innenfläche in besonderer Weise.

Erfindungsgemäß ist auf der Haltevorrichtung oder auf dem Zahnersatzteil wenigstens eine Referenzfläche vorgesehen, deren relative Lage zu den Anlagepunkten oder -flächen des Zahnersatzteils bekannt ist, wobei die Vermessungsdaten mit den Konstruktionsdaten mittels der Referenzfläche miteinander in Beziehung gesetzt werden. Damit ist es möglich, die Lage des Zahnersatzteils nach der Befestigung im Patientenmund genau zu bestimmen, da gegebenenfalls ungleichmäßige Schichtdicken zu Ungenauigkeiten führen können.

Vorteilhafterweise werden der 3D-Datensatz der Zahnsituation, die Konstruktionsdaten und die Vermessungsdaten gemeinsam miteinander in Beziehung gesetzt und diese Daten auf der Anzeige angezeigt. Damit wird es dem Zahntechniker ermöglicht, die Wirkung des Zahnersatzteils in der späteren Umgebung zu kontrollieren und in einer vorteilhaften Weiterbildung die Konstruktionsdaten anzupassen.

Besonders vorteilhaft ist es, wenn der 3D-Datensatz der Zahnsituation auch den Gegenkiefer umfasst, wobei mittels eines auf einer Recheneinheit geladenen und laufenden Softwareartikulators beide Kieferhälften relativ zueinander bewegt werden können. Damit erhält der Zahntechniker die Möglichkeit, sowohl die statische als auch die dynamische Okklusion des Zahnersatzteils zu prüfen; insbesondere dann, wenn der Softwareartikulator vorteilhafterweise mit einer Kollisionskontrolle ausgestattet ist, die die Berührpunkte beider Kieferhälften anzeigt.

Vorteilhafterweise wird der 3D-Datensatz der Zahnsituation mittels dreidimensionaler intraoraler Vermessung oder mittels dreidimensionaler Vermessung eines Abdrucks oder eines Modells erzeugt.

Vorteilhafterweise wird der 3D-Datensatz der Zahnsituation und/oder die Konstruktionsdaten über Fernkommunikationmittel bereitgestellt. Dies verkürzt die Herstellungszeiten.

Vorteilhafterweise ist das Zahnersatzteil mehrteilig, wobei eines der Teile ein Gerüst darstellt, das mittels CAD/CAM-Methoden konstruiert und hergestellt wird. Damit erübrigt sich das Vorhandensein eines körperlichen Modells der Zahnsituation, da die Anlageflächen des Zahnersatzteils direkt aus den Vermessungsdaten bekannt sind. Das Gerüst wird daher eine sehr gute Passgenauigkeit aufweisen.

Vorteilhafterweise ist wenigstens eine Innenfläche des Gerüsts als Anlagepunkt oder -fläche ausgebildet, wobei die Haltevorrichtung eine an diese Innenfläche angepasste Anlagefläche aufweist. Damit ist eine besonders passgenaue Positionierung des Gerüsts auf der Haltevorrichtung möglich.

Ein weiterer Aspekt der Erfindung betrifft ein Verfahren zur Herstellung eines Zahnersatzteils, wobei das Zahnersatzteil ein Gerüst und einen Aufbau umfasst, wobei ein 3D-Datensatz einer Zahnsituation eines Patienten vorliegt und mit einer dreidimensionalen Vermessungseinrichtung Vermessungsdaten des Gerüsts oder des zumindest teilweise darauf aufgebauten Zahnersatzteils aufgenommen werden, wobei die Vermessungsdaten und der 3D-Datensatz der Zahnsituation auf einer Anzeige dargestellt werden. Damit kann der Zahntechniker das Zahnersatzteil im späteren klinischen Umfeld begutachten.

Vorteilhafterweise wird das Gerüst mittels CAD/CAM-Methoden auf der Grundlage des 3D-Datensatzes der Zahnsituation konstruiert und hergestellt. Dies ermöglicht eine besonders schnelle und genaue Herstellung des Gerüsts und der Zeit-, Kosten- und Arbeitsaufwand wird reduziert. Vorteilhafterweise werden die Vermessungsdaten mit dem 3D-Datensatz der Zahnsituation größen- und lagerichtig in Beziehung gesetzt. Damit wird die Wirkung des Zahnersatzteils im klinischen Umfeld besonders gut wahrnehmbar.

Dies gelingt besonders leicht, wenn die Darstellung der Anzeige graphisch ist.

Erfindungsgemäß werden bei der Konstruktion des Gerüsts Anlagepunkte oder -flächen vorgesehen, die ein eindeutiges Positionieren des Gerüsts in einer Haltevorrichtung der Vermessungseinrichtung ermöglichen. Dies ermöglicht die Vermessung des Zahnersatzteils aus immer der exakt gleichen Position.

Erfindungsgemäß ist auf der Haltevorrichtung oder auf dem Zahnersatzteil oder auf dem Gerüst wenigstens eine Referenzfläche vorgesehen, deren relative Lage zu den Anlagepunkten oder -flächen des Gerüsts bekannt ist, wobei die Vermessungsdaten mit dem Datensatz der Zahnsituation mittels der Referenzfläche miteinander in Beziehung gesetzt werden. Dies ermöglicht eine eindeutige Bestimmung der Lage der Anlageflächen bezüglich der Außenkontur des Zahnersatzteils.

Ein weiterer Aspekt der Erfindung betrifft eine Vorrichtung zur teilweise manuellen Bearbeitung eines Zahnersatzteils, wobei die Vorrichtung eine dreidimensionale Vermessungseinrichtung zur Erzeugung von Vermessungsdaten des zu bearbeitenden Zahnersatzteils sowie eine Recheneinheit und eine Anzeige umfasst, wobei die Recheneinheit einen ersten Speicherbereich zur Speicherung eines ersten dreidimensionalen Datensatzes und eines zweiten Speicherbereich zur Speicherung der Vermessungsdaten aufweist, wobei die Recheneinheit mit der Anzeige zur Anzeige der beiden Datensätze in Verbindung steht und wobei die Recheneinheit Mittel zum In-Beziehung-Setzen und zum Vergleich der beiden Datensätze und weiterhin Mittel zur graphischen Aufbereitung der durch den Vergleich ermittelten Daten aufweist. Eine solche Vorrichtung ermöglicht es, ein Zahnersatzteil mit der Präzision computergestützter Fertigungsverfahren und mit der Ästhetik handgefertigter Zahnersatzteile herzustellen.

Vorteilhafterweise umfasst die Vorrichtung eine computergestützte Fertigungseinheit zur Herstellung eines Teils des Zahnersatzteils. Damit kann insbesondere der unsichtbare Teil des Zahnersatzteils, der die Anlageflächen zur Präparationsstelle im Patientenmund darstellt, auf der Grundlage der digitalen Daten hochpräzise gefertigt werden.

Vorteilhafterweise ist der erste 3D-Datensatz ein 3D-Datensatz der Zahnsituation des Patientenmundes. Dann kann auf der Anzeige die Wirkung des die Wirkung des Zahnersatzteils im Patientenmund abgeschätzt werden.

Alternativ kann der erste 3D-Datensatz aus Konstruktionsdaten des herzustellenden Zahnersatzteils bestehen. Dann kann ein Vergleich zwischen dem vermessenen Zahnersatzteil und den Konstruktionsdaten vorgenommen werden, womit die Maßhaltigkeit des Zahnersatzteils gut gewährbar ist.

Vorteilhafterweise umfasst die Recheneinheit einen dritten Speicherbereich zur Speicherung von Konstruktionsdaten zusammen mit den 3D-Daten der Zahnsituation, wobei auf der Anzeige alle drei Datensätze angezeigt werden. Dies ermöglicht eine besonders übersichtliche und anschauliche Darstellung.

Vorteilhafterweise umfasst der Datensatz der Zahnsituation auch einen Gegenkiefer, wobei auf der Recheneinheit ein Softwareartikulator zur Berechnung der Relativbewegung der beiden Kiefer gespeichert und ladbar ist, wobei die Mittel zur graphischen Aufbereitung diese Relativbewegung zur Darstellung auf der Anzeige aufbereiten. Dies ermöglicht es dem Zahntechniker, sowohl die statische als auch die dynamische Okklusion zu überprüfen. Besonders vorteilhaft gelingt dies, wenn der Softwareartikulator eine Kollisionskontrolle umfasst, die die Berührpunkte zwischen beiden Kiefern anzeigt.

Erfindungsgemäß ist eine Haltevorrichtung vorgesehen, auf der das Zahnersatzteil ortsfest positionierbar ist, wobei die Haltevorrichtung eine oder mehrere Referenzflächen zur Bestimmung der Form und Lage des Zahnersatzteils bezüglich seiner Anlagepunkte oder -flächen aufweist. Die Anlagepunkte oder -flächen sind auf der Vermessung nicht sichtbar und deren Lage bezüglich der Außenflächen können durch den Auftrag von Material nicht eindeutig bestimmt werden.

Erfindungsgemäß weist die Haltevorrichtung Anlageflächen auf, die eine Passung mit den Anlageflächen des Zahnersatzteils bilden. Dies ermöglicht eine besonders zuverlässige Positionierung des Zahnersatzteils auf der Haltevorrichtung.

Ein letzter Aspekt der Erfindung betrifft eine Vorrichtung zur teilweise manuellen Bearbeitung eines Zahnersatzteils, wobei die Vorrichtung eine dreidimensionale Vermessungseinrichtung zur Erzeugung von Vermessungsdaten des zu bearbeitenden Zahnersatzteils sowie eine Recheneinheit und eine Anzeige umfasst, wobei die Recheneinheit einen ersten Speicherbereich zur Speicherung eines ersten dreidimensionalen Datensatzes und einen zweiten Speicherbereich zur Speicherung der Vermessungsdaten aufweist, wobei die Recheneinheit mit der Anzeige zur Darstellung der beiden Datensätze in Verbindung steht und wobei weiterhin eine Haltevorrichtung vorgesehen ist, auf der das Zahnersatzteil ortsfest positionierbar ist. Die Haltevorrichtung weist eine oder mehrere Referenzflächen zur Bestimmung der Form und Lage des Zahnersatzteils bezüglich seiner Anlagepunkte oder -flächen auf. Mit einer solchen Vorrichtung ist die teilweise manuelle Herstellung eines Zahnersatzteils besonders leicht möglich.

Erfindungsgemäß weist die Haltevorrichtung einen Abguss der inneren Oberfläche des Zahnersatzteils aus einem aushärtbaren Material, vorzugsweise Gips, auf. Damit lässt sich besonders leicht eine Haltevorrichtung erzeugen, die zur Halterung des individuellen Zahnersatzteils sehr gut geeignet ist.

Vorteilhafterweise umfasst die Vorrichtung eine computergestützte Fertigungseinheit zur Herstellung eines Gerüsts. Damit ist die Herstellung des Gerüsts mit den Anlageflächen zu Präparationsstelle im Patientenmund besonders präzise möglich, was eine gut Funktionalität des Zahnersatzteils ermöglicht.

Vorteilhafterweise ist der erste 3D-Datensatz ein 3D-Datensatz der Zahnsituation des Patientenmundes. Damit können die Vermessungsdaten zusammen mit dem 3D-Datensatz der Zahnsituation auf dem Bildschirm dargestellt werden.

Alternativ kann der erste 3D-Datensatz aus Konstruktionsdaten des herzustellenden Zahnersatzteils bestehen. Dies ermöglicht dem Zahntechniker den Vergleich des Zahnersatzteils mit den Konstruktionsvorgaben.

Vorteilhafterweise verfügt die Recheneinheit über einen dritten Speicherbereich zur Speicherung von Konstruktionsdaten des Zahnersatzteils neben dem 3D-Datensatz der Zahnsituation des Patientenmundes, wobei auf der Anzeige alle drei Datensätze angezeigt werden. Dies ermöglicht eine besonders gute Kontrolle des Zahnersatzteils.

Besonders vorteilhaft ist es, wenn der Datensatz der Zahnsituation auch den Gegenkiefer umfasst, wobei auf der Recheneinheit ein Softwareartikulator zur Berechnung der Relativbewegung der beiden Kiefer gespeichert und ladbar ist, wobei die Mittel zur graphischen Aufbereitung diese Relativbewegung zur Darstellung auf der Anzeige aufbereiten. Damit ist es möglich, sowohl die statische als auch die dynamische Okklusion zu überprüfen.

Die Vorrichtung bietet darüber hinaus den Vorteil, dass der Zahntechniker keinen körperlichen Abdruck der Zahnsituation mehr benötigt. Diese Abdrücke sind häufig ungenau, da sie einerseits beim Entfernen des Abdrucks aus dem Mund geweitet werden und da sie beim Trocknen ihre Größe andern. Die zu erwartende Passgenauigkeit ist kleiner oder höchstens gleich wie bei einer hochpräzisen intraoralen dreidimensionalen Vermessung.

### Kurzbeschreibung der Zeichnungen

Das erfindungsgemäße Verfahren wird anhand der Zeichnung erläutert. Es zeigen:
- Fig. 1: eine erfindungsgemäße Vorrichtung zur Erzeugung eines Zahnersatzteils, die
- Fig. 2: eine erste Darstellungsmethode des Zahnersatzteils auf einem Monitor, die
- Fig. 3: eine zweite Darstellungsmethode des Zahnersatzteils auf einem Monitor und die
- Fig. 4A,B: eine Haltevorrichtung mit Referenzflächen. Ausführungsbeispiel

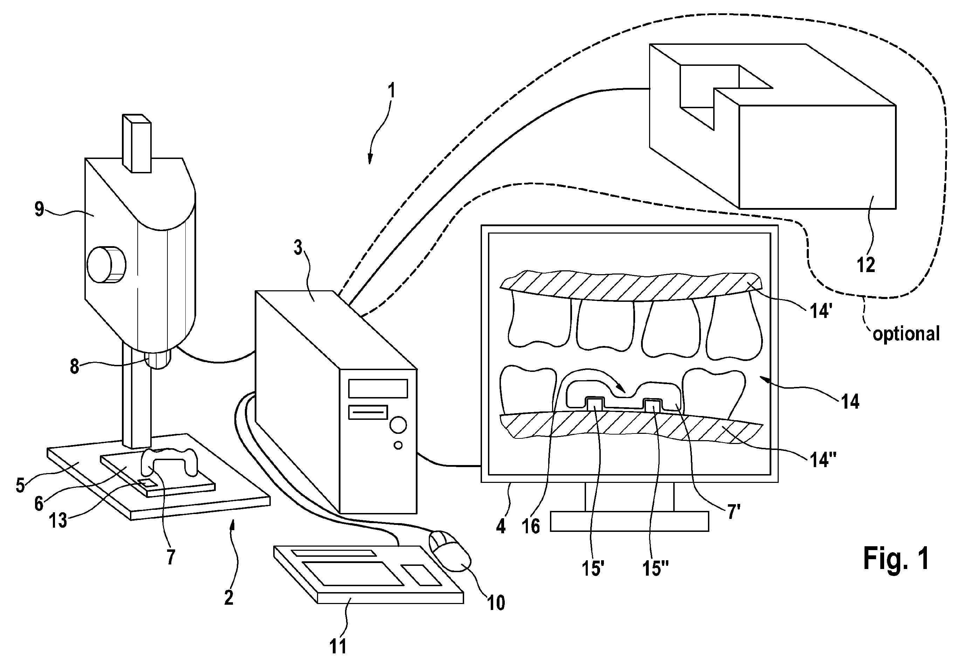

Die Fig. 1 zeigt eine Vorrichtung 1 zur teilweise manuellen Herstellung eines Zahnersatzteils 7. Die Vorrichtung 1 umfasst im wesentlichen eine dreidimensionale Vermessungseinrichtung 2, einen Computer 3 sowie einen Bildschirm 4.

Auf der Bodenplatte 5 der dreidimensionalen Vermessungseinrichtung 2 befindet sich eine Haltevorrichtung 6 mit einem darauf in einer eindeutigen Lage positionierten, fertigzustellenden Zahnersatzteil 7. Das Zahnersatzteil 7 wird mittels der Haltevorrichtung 6 im Aufnahmefeld einer Vermessungsoptik 8 der dreidimensionalen Vermessungseinrichtung 2 platziert. Die Vermessungsoptik 8 ist in einem höhenverstellbaren Gehäuse 9 der dreidimensionalen Vermessungseinrichtung 2 untergebracht und vorzugsweise telezentrisch ausgebildet.

Die dreidimensionale Vermessungseinrichtung 2 ist mit dem Computer 3 verbunden, der mittels einer Maus 10 und einer Tastatur 11 bedient wird. Der Computer 3 ist weiterhin mit dem Monitor 4 verbunden.

Optional kann der Computer 3 mit einer Schleifmaschine 12 in Verbindung stehen, die Teile des Zahnersatzteils 7 computergestützt fertigt. Insbesondere das hochfeste Gerüst des Zahnersatzteils 7, das mit seinen Anlageflächen an dem oder den präparierten Zähnen des Patienten befestigt wird, kann von der Schleifmaschine 12 gefertigt werden, da eine Fertigung mittels CAM-Methoden einerseits sehr präzise ist und andererseits dadurch auf die Verwendung eines gegenständlichen Modells der Zahnsituation, beispielsweise in Form eines Abdrucks, verzichtet werden kann.

Die Konstruktionsdaten, die zur Herstellung des Zahnersatzteils 7 nötig sind und die auf der Grundlage von Vermessungsdaten der Zahnsituation mittels CAD-Methoden erzeugt werden, können einerseits vom Zahnarzt angefertigt und übermittelt oder mit Hilfe des Computers 3 vom Zahntechniker selbst erzeugt werden.

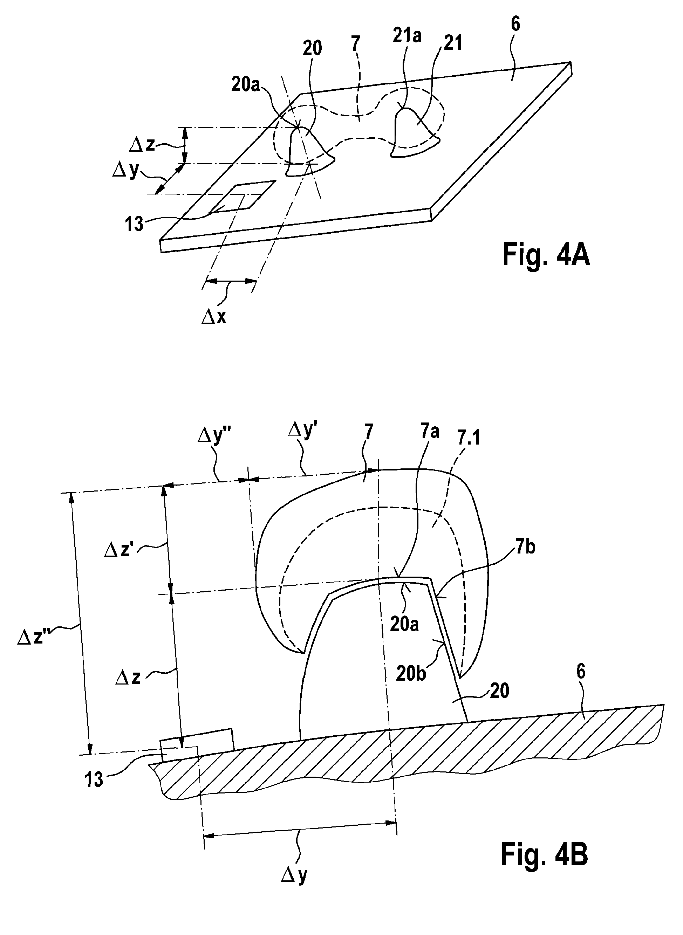

Für das durch die Schleifmaschine 12 hergestellte Gerüst 7.1 wird zuerst, wie in den Fig. 4A, B eingehender beschrieben, eine Haltevorrichtung 6 fertiggestellt. Anschließend wird das Gerüst 7.1 durch den Zahntechniker manuell verblendet und erhält so neben einer sehr guten Passgenauigkeit eine hervorragende Ästhetik.

Der Vorgang der Fertigstellung des Zahnersatzteils 7 auf der Basis des Gerüsts 7.1 wird im folgenden beschrieben.

Mit der dreidimensionalen Vermessungseinrichtung 2 wird in einem ersten Schritt das Gerüst 7.1 und eine auf der Haltevorrichtung 6 angebrachte Referenzfläche 13 vermessen. Die Bedeutung der Referenzfläche 13 wird eingehender in den Fig. 4A, B erläutert. Die Vermessungsdaten werden an den Computer 3 übermittelt und von diesem ausgewertet.

Zur Fertigstellung des Zahnersatzteils 7 durch Verblenden des Gerüsts 7.1 im Aufschlickerverfahren trägt der Zahntechniker eine Schlickerschicht auf das unfertige Zahnersatzteil 7. Dazu kann er das Zahnersatzteil 7 von der Haltevorrichtung 6 abnehmen und in seiner bevorzugten Arbeitshaltung bearbeiten. Nach dem Auftrag und der Modellierung der Schlickerschicht wird das Zahnersatzteil 7 wieder positionsgenau auf die Haltevorrichtung 6 gesetzt und auf der Bodenplatte 5 der dreidimensionalen Vermessungseinrichtung 2 positioniert. Anschließend wird eine weitere Vermessung gestartet.

Die weitere Vermessung des Zahnersatzteils 7 kann auch versetzt zu letzten Vermessung bezüglich der Vermessungseinrichtung 9 vorgenommen werden, wenn die Ausdehnungen des Zahnersatzteils 7 größer sind als der Bildbereich der Vermessungsoptik 8. Auch eine um eine horizontale Achse gedrehte Vermessung ist möglich, sollten Hinterschneidungen sichtbar gemacht werden müssen, die von der Vermessungsoptik 8 aus einer Ansicht heraus nicht sichtbar sind.

Eine graphische Auswerteeinheit, die Teil des Computers 3 ist, verarbeitet die Vermessungsdaten und gegebenenfalls weitere dreidimensionale Datensätze und stellt sie dem Monitor 4 zur Verfügung. Auf dem Bildschirm 4 wird dem Zahntechniker dann die aktuelle Form 7' des Zahnersatzteils 7 angezeigt. Der Zahntechniker kann daraufhin solange Nachbesserungen vornehmen und das nachgebesserte Zahnersatzteil 7 neu vermessen, bis das Zahnersatzteil 7 die gewünschte Form hat. Die Darstellung auf dem Monitor 4 ist frei wählbar, so dass der Zahntechniker die Darstellung 7' des Zahnersatzteils 7 von allen Seiten begutachten kann. Anschließend wird die Schlickerschicht gebrannt. Der Zahntechniker wiederholt die vorher beschriebenen Schritte - Auftragen, Modellieren, Messen, Nachbessern, Messen, Brennen - so lange, bis das Zahnersatzteil vollständig fertig gestellt ist.

In einem letzten Schritt wird eine Dokumentation der Fertigung vorgenommen.

Der Computer 3 unterstützt den Zahntechniker dabei auf mehrere mögliche Arten:
Auf dem Computer 3 ist eine Software geladen, die zur Erzeugung von 3D-Ansichten aus 3D-Datensätzen geeignet ist. Mehrere 3D-Datensätze können lage- und orientierungsrichtig miteinander in Beziehung gesetzt werden und daraus ein gemeinsamer 3D-Datensatz erzeugt werden, der auf dem Monitor 4 zur Anzeige gebracht wird.

Ein Datensatz 7' wird dabei durch die letzte Vermessung des Zahnersatzteils 7 mittels der dreidimensionalen Vermessungseinrichtung 2 gebildet. Dieser Datensatz 7' wird in einer ersten Variante mit dem 3D-Datensatz der Zahnsituation 14 in Beziehung gesetzt und daraus eine Ansicht erzeugt, wie sie auf dem Monitor 4 dargestellt ist. Das Bild 7' des Zahnersatzteils 7 ist lagerichtig in die Zahnsituation 14 des Patientenmundes eingesetzt. Das Zahnersatzteil 7 ist hier als Brücke, die auf zwei Stützpfeilern 15', 15" aufgesetzt wird, ausgebildet.

Der Zahntechniker hat mit dieser Ansicht die Möglichkeit, das Zahnersatzteil 7 in seinem späteren Umfeld zu begutachten und eine Anpassung beispielsweise der Höhe und der Ausdehnung in mesialer, distaler, bukkaler und lingualer Richtung vorzunehmen, um ein einheitliches Erscheinungsbild zu und gute Funktionalität erzielen.

Auf dem Computer 3 ist ein Softwareartikulator geladen, der es ermöglicht, den Gegenkiefer 14' relativ zum Kiefer 14" zu bewegen. Mit Hilfe einer Kollisionskontrolle werden Berührungen zwischen den Zähnen des Kiefers 14" und des Gegenkiefers 14' festgestellt und auf der Anzeige dargestellt.

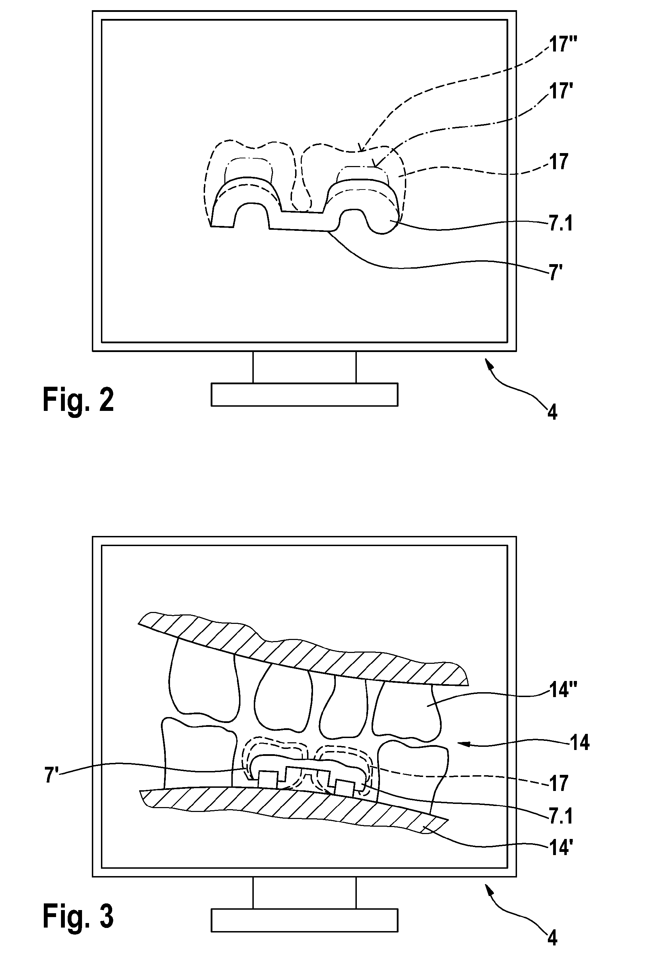

In **Fig. 2** ist eine weitere Darstellungsmöglichkeit gezeigt. Sofern ein 3D-Datensatz der Konstruktion des fertigzustellenden Zahneratzteils vorliegt, kann der Computer 3 die Konstruktionsdaten (17, 17', 17") und die Vermessungsdaten (7') des Zahnersatzteils 7 miteinander in Beziehung setzen. Das fertigzustellende Zahnersatzteil 7 ist mehrschichtig transparent dargestellt, wobei die Schichtgrenzen 17' und 17" die Verwendung von verschiedenen Materialien zur Herstellung des Zahneratzteils 7 anzeigen. Das Bild 7' des unfertigen Zahnersatzteils 7 wird in die transparente, dreidimensionale Darstellung der Konstruktionsdaten lagerichtig eingeblendet, so dass der Zahntechniker Unterschiede zwischen dem real existierenden Zahnersatzteil 7 und dem Konstruktionsdatensatz erkennt. Er hat dann die Möglichkeit, an den nicht passenden Stellen Material auf- oder abzutragen und kann das Zahnersatzteil 7 danach erneut vermessen, bis er eine ausreichende Überdeckung zwischen dem Zahnersatzteil 7 und den Konstruktionsvorgaben erhält.

Wie in **Fig. 3** dargestellt, ist es auch möglich, das Bild 7' des Zahnersatzteils 7 mit den Konstruktionsdaten 17, 17', 17" und dem 3D-Datensatz der Zahnsituation 14 lagerichtig zu kombinieren und auf dem Monitor 4 darzustellen.

Zur lagerichtigen Positionierung des Zahnersatzteils 7 bezüglich der Vermessungsdaten aus dem Patientenmund 14 wird die Lage und die Größe der Referenzfläche 13 herangezogen. Die **Fig. 4A** zeigt die Haltvorrichtung 6 in vergrößerter Darstellung. Auf der Haltevorrichtung 6 ist die Referenzfläche 13 angebracht. Die Kontur und die Größe der Referenzfläche 13 ist dem Computer bekannt. Die Haltevorrichtung 6 weist zwei Erhöhungen 20, 21 auf, die durch Abgießen der Innenflächen des gestrichelt dargestellten Gerüsts 22 des Zahnersatzteils 7 mit Gips entstanden ist. Die Erhöhungen 20, 21 bilden damit Anlageflächen für die Anlageflächen des Zahnersatzteils 7 auf den präparierten Zahnstümpfen 15', 15". Die Erhöhung 20, 21 können alternativ auch durch Ausschleifen mit der Schleifmaschine 12 erstellt werden.

Zur lagerichtigen In-Beziehung-Setzung des Zahnersatzteils 7 bezüglich der Zahnsituation 14 beziehungsweise der Konstruktionsdaten 17 durch den Computer 3 ist es erforderlich, die Lage der Anlageflächen des Zahnersatzteils 7 an die präparierte Zahnstelle bezüglich der Außenkontur des Zahnersatzteils 7 zu kennen. Da bei einem bereits bearbeiteten Zahnersatzteil 7 keine feste Lagebeziehung mehr besteht, ist es erforderlich, eine externe Referenzierung vorzunehmen.

Zur Bestimmung der Lagebeziehung zwischen der Referenzfläche 13 und der Erhöhung 20 wird eine Aufnahme der Haltevorrichtung 6 ohne aufgesetztes Zahnersatzteil 7 vorgenommen. Damit wird die relative Lage, die durch den Abstand der Anlagefläche 20a (Δx, Δy, Δz) in den drei Raumrichtungen zu der Referenzfläche 13 gegeben ist, bestimmt.

Dieses Vorgehen wird auch für die weitere Erhöhung 21 durchgeführt, womit die Lage der Anlagefläche 21a der Erhöhung 21 relativ zu der Referenzfläche 13 eindeutig bestimmt ist.

Bei einer Vermessung des auf die Erhöhungen 20, 21 aufgesetzten Zahnersatzteils 7 lässt die Bestimmung der Lage und der Referenzfläche 13 damit einen eindeutigen Rückschluss auf die Lage der Anlageflächen des Zahnersatzteils 7 zu.

Dies wird in **Fig. 4B** deutlich. Die als Anlageflächen ausgebildeten Innenflächen 7a und 7b des Zahnersatzteils 7 passen auf die Anlageflächen 20a und 20b der Erhöhung 20. Der Abstand Δy und Δz der Anlagefläche 20a und damit auch der Anlagefläche 7a ist dem System durch die Vermessung der Haltevorrichtung 6 ohne aufgesetztes Zahnersatzteil 7 bekannt. Durch die Vermessung des Zahnersatzteils 7 und der Referenzfläche 13 wird in einem ersten Schritt der Abstand zwischen der Referenzfläche 13 und den Grenzen des Zahnersatzteils Δz" , Δy" bestimmt. Dann werden durch Differenzbildung die Ausdehnungen Δy' und die Schichtdicke Δz' bestimmt.

Die Haltevorrichtung 6 ermöglicht es, das Zahnersatzteil 7 zur Bearbeitung abzunehmen und schnell und in eindeutiger Lage auf der Haltevorrichtung zu befestigen.

## Patentansprüche

1. Verfahren zur Herstellung eines Zahnersatzteils (7), bei dem das Zahnersatzteil (7) manuell bearbeitet wird, wobei Konstruktionsdaten (17, 17', 17" ) des herzustellenden Zahnersatzteils (7) vorliegen, wobei bei der Konstruktion des Zahnersatzteils (7) eine Innenfläche (7a, 7b) vorgesehen wird, die ein eindeutiges Positionieren des Zahnersatzteils in einer Haltevorrichtung (6) einer Vermessungseinrichtung (2) ermöglicht, wobei die Haltevorrichtung (6) eine an diese Innenfläche (7a, 7b) angepasste Anlagefläche (20a, 20b) aufweist, wobei nach einem Bearbeitungsschritt zur Herstellung des Zahnersatzteils (7) mit einer dreidimensionalen Vermessungseinrichtung (2) Vermessungsdaten (7') des in der Haltevorrichtung positionierten, bearbeiteten herzustellenden Zahnersatzteils (7) aufgenommen und zusammen mit den Konstruktionsdaten (17, 17', 17") auf einer Anzeige (4) dargestellt werden, wobei auf der Haltevorrichtung (6) oder auf dem Zahnersatzteil (7) wenigstens eine Referenzfläche (13) vorgesehen ist, deren relative Lage zu den Anlagepunkten oder -flächen des Zahnersatzteils (7a, 7b) bekannt ist und dass die Vermessungsdaten (7') mit den Konstruktionsdaten (17, 17', 17") mittels der Referenzflächen (13) miteinander in Beziehung gesetzt werden.

2. Verfahren nach Anspruch 1, **dadurch gekennzeichnet, dass** die Vermessungsdaten (7') und die Konstruktionsdaten (17, 17', 17") miteinander in Beziehung gesetzt werden und auf der Anzeige (4) Unterschiede zwischen den Vermessungsdaten (7') und den Konstruktionsdaten (17, 17', 17'') angezeigt werden.

3. Verfahren nach einem der Ansprüche 1 bis 2, **dadurch gekennzeichnet, dass** der 3D-Datensatz der Zahnsituation (14), die Konstruktionsdaten (17, 17', 17") und die Vermessungsdaten (7') miteinander in Beziehung gesetzt werden und diese Daten auf der Anzeige (4) angezeigt werden.

4. Verfahren nach Anspruch 3, **dadurch gekennzeichnet, dass** der 3D-Datensatz der Zahnsituation (14) auch den Gegenkiefer (14') umfasst, wobei mittels eines auf einer Recheneinheit (3) geladenen und laufenden Softwareartikulators beide Kiefer (14', 14'') relativ zueinander bewegt werden können.

5. Verfahren nach einem der Ansprüche 1 bis 4, **dadurch gekennzeichnet, dass** der 3D-Datensatz der Zahnsituation (14) mittels dreidimensionaler intraoraler Vermessung oder mittels dreidimensionaler Vermessung eines Abdrucks oder eines Modells erzeugt wird.

6. Verfahren nach einem der Ansprüche 1 bis 5, **dadurch gekennzeichnet, dass** der 3D-Datensatz der Zahnsituation (14) und/oder die Konstruktionsdaten (17, 17', 17") über Fernkommunikationsmittel bereitgestellt werden.

7. Verfahren nach einem der Ansprüche 1 bis 6, **dadurch gekennzeichnet, dass** das Zahnersatzteil (7) mehrteilig ist, wobei eines der Teile ein Gerüst (7.1) ist, das mittels CAD/CAM-Methoden konstruiert und hergestellt wird.

8. Verfahren nach Anspruch 7, **dadurch gekennzeichnet, dass** wenigstens eine Innenfläche (7a, 7b) des Gerüsts (7.1) einen Anlagepunkt oder eine Anlagefläche darstellt und dass die Haltevorrichtung (6) eine an diese Innenfläche (7a, 7b) angepasste Anlagefläche (20a, 20b) aufweist.

9. Verfahren zur Herstellung eines Zahnersatzteils (7), wobei das Zahnersatzteil (7) ein Gerüst (7.1) und einen Aufbau umfasst, wobei ein 3D-Datensatz einer Zahnsituation (14) eines Patienten vorliegt und dass mit einer dreidimensionalen Vermessungseinrichtung (2) Vermessungsdaten (7') des Gerüsts (7.1) oder des zumindest teilweise darauf aufgebauten Zahnersatzteils (7) aufgenommen werden, wobei bei der Konstruktion des Gerüsts (7.1) Innenflächen (7a, 7b) vorgesehen werden, die ein eindeutiges Positionieren des Gerüsts (7.1) in einer Haltevorrichtung (6) der Vermessungseinrichtung ermöglichen, wobei die Vermessungsdaten (7') und der 3D-Datensatz der Zahnsituation (14) auf einer Anzeige (4) dargestellt werden und wobei auf der Haltevorrichtung (6) oder auf dem Zahnersatzteil (7) oder auf dem Gerüst (7.1) wenigstens eine Referenzfläche (13) vorgesehen ist, deren Lage zu den Innenflächen des Gerüsts (7a, 7b) bekannt ist, wobei die Vermessungsdaten (7') mit dem Datensatz der Zahnsituation (14) mittels der Referenzfläche (13) miteinander in Beziehung gesetzt werden.

10. Verfahren nach Anspruch 9, **dadurch gekennzeichnet, dass** das Gerüst (7.1) mittels CAD/CAM-Methoden auf der Grundlage des 3D-Datensatzes der Zahnsituation (14) konstruiert und hergestellt wird.

11. Verfahren nach Anspruch 9 oder 10, **dadurch gekennzeichnet, dass** die Vermessungsdaten (7') mit dem 3D-Datensatz der Zahnsituation (14) größen- und lagerichtig in Beziehung gesetzt werden.

12. Verfahren nach einem der Ansprüche 9 bis 11, **dadurch gekennzeichnet, dass** die Darstellung auf der Anzeige (4) graphisch ist.

13. Vorrichtung zur teilweise manuellen Bearbeitung eines Zahnersatzteils (7), wobei die Vorrichtung (1) eine dreidimensionale Vermessungseinrichtung (2) zur Erzeugung von Vermessungsdaten (7') des zu bearbeitenden Zahnersatzteils (7) sowie eine Recheneinheit (3) und eine Anzeige (4) umfasst, wobei die Recheneinheit (3) einen ersten Speicherbereich zur Speicherung eines ersten 3-dimensionalen Datensatzes (14, 17, 17', 17") und einen zweiten Speicherbereich zur Speicherung der Vermessungsdaten (7') aufweist, wobei die Recheneinheit (3) mit der Anzeige (4) zur Anzeige der beiden Datensätze (14, 17, 17', 17'') in Verbindung steht und dass die Recheneinheit (3) Mittel zum In-Beziehung-Setzen und zum Vergleich der beiden Datensätze (14, 17, 17', 17") und weiterhin Mittel zur graphischen Aufbereitung der durch den Vergleich ermittelten Daten aufweist, wobei eine Haltevorrichtung (6) vorgesehen ist, auf der das Zahnersatzteil (7) ortsfest positionierbar ist, wobei die Haltevorrichtung (6) eine oder mehrere Referenzflächen (13) zur Bestimmung der Form und Lage des Zahnersatzteils (7) bezüglich seiner Innenflächen (7a, 7b) aufweist und wobei die Haltevorrichtung (6) Anlageflächen (20a, 20b, 21a) aufweist, die eine Passung mit der Innenfläche (7a, 7b) des Zahnersatzteils (7) bilden.

14. Vorrichtung nach Anspruch 13, **dadurch gekennzeichnet, dass** die Vorrichtung eine computergestützte Fertigungseinheit (12) zur Herstellung eines Teils des Zahnersatzteils (7) umfasst.

15. Vorrichtung nach Anspruch 13 oder 14, **dadurch gekennzeichnet, dass** der erste 3D-Datensatz ein 3D-Datensatz der Zahnsituation (14) des Patientenmundes ist.

16. Vorrichtung nach Anspruch 13 oder 14, **dadurch gekennzeichnet, dass** der erste 3D-Datensatz aus Konstruktionsdaten (17, 17', 17") des herzustellenden Zahnersatzteils (7) besteht.

17. Vorrichtung nach Anspruch 16, **dadurch gekennzeichnet, dass** die Recheneinheit (3) über einen dritten Speicherbereich zur Speicherung von Konstruktionsdaten (17, 17', 17'') des herzustellenden Zahnersatzteils (7) umfasst, wobei auf der Anzeige (4) alle drei Datensätze (7', 14, 17, 17', 17") angezeigt werden.

18. Vorrichtung nach Anspruch 16, **dadurch gekennzeichnet, dass** der Datensatz der Zahnsituation (14) auch einen Gegenkiefer (14') umfasst und dass auf der Recheneinheit (3) ein Softwareartikulator zur Berechnung der Relativbewegung der beiden Kiefer (14', 14'') gespeichert und ladbar ist, wobei die Mittel zur graphischen Aufbereitung diese Relativbewegung zur Darstellung auf der Anzeige (4) aufbereiten.

19. Vorrichtung zur teilweise manuellen Bearbeitung eines Zahnersatzteils (7), wobei die Vorrichtung (1) eine dreidimensionale Vermessungseinrichtung (2) zur Erzeugung von Vermessungsdaten (7') des zu bearbeitenden Zahnersatzteils (7) sowie eine Recheneinheit (3) und eine Anzeige (4) umfasst, wobei die Recheneinheit (3) einen ersten Speicherbereich zur Speicherung eines ersten 3-dimensionalen Datensatzes (14, 17, 17', 17") und einen zweiten Speicherbereich zur Speicherung der Vermessungsdaten (7') aufweist, wobei die Recheneinheit (3) mit der Anzeige (4) zur Anzeige der beiden Datensätze (7', 14, 17, 17', 17'') in Verbindung steht, wobei weiterhin eine Haltevorrichtung (6) vorgesehen ist, auf der das Zahnersatzteil (7) ortsfest positionierbar ist, wobei die Haltevorrichtung (6) eine oder mehrere Referenzflächen (13) zur Bestimmung der Form und Lage des Zahnersatzteils (7) bezüglich seiner Innenflächen (7a, 7b) aufweist, wobei die Haltevorrichtung (6) einen Abguss der inneren Oberfläche (7a, 7b) des Zahnersatzteils (7) aus einem aushärtbaren Material, vorzugsweise Gips, aufweist.

20. Vorrichtung nach Anspruch 19, **dadurch gekennzeichnet, dass** die Vorrichtung (1) eine computergestützte Fertigungseinheit (12) zur Herstellung eines Gerüsts umfasst.

21. Vorrichtung nach einem der Ansprüche 19 bis 20, **dadurch gekennzeichnet, dass** der erste 3D-Datensatz ein 3D-Datensatz der Zahnsituation des Patientenmundes (14) ist.

22. Vorrichtung nach einem der Ansprüche 19 bis 21, **dadurch gekennzeichnet, dass** der erste 3D-Datensatz aus Konstruktionsdaten des herzustellenden Zahnersatzteils (17, 17', 17") besteht.

23. Vorrichtung nach Anspruch 21, **dadurch gekennzeichnet, dass** die Recheneinheit (3) über einen dritten Speicherbereich zur Speicherung von Konstruktionsdaten des herzustellenden Zahnersatzteils (17, 17', 17'') umfasst, wobei auf der Anzeige (4) alle drei Datensätze (7', 14, 17, 17', 17") angezeigt werden.

24. Vorrichtung nach Anspruch 21, **dadurch gekennzeichnet, dass** der Datensatz der Zahnsituation (14) auch einen Gegenkiefer (14') umfasst und dass auf der Recheneinheit (3) ein Softwareartikulator zur Berechnung der Relativbewegung der beiden Kiefer (14', 14") gespeichert und ladbar ist, wobei die Mittel zur graphischen Aufbereitung diese Relativbewegung zur Darstellung auf der Anzeige (4) aufbereiten.

## Claims

1. A method for fabricating a dental prosthesis (7), in which the dental prosthesis (7) is processed manually, wherein design data (17, 17', 17'') of the dental prosthesis (7) to be produced are available, wherein in the design of the dental prosthesis (7), an inner surface (7a, 7b) is provided that enables specific positioning of the dental prosthesis within a holding device (6) of a measuring device (2), wherein the holding device (6) has a contact surface (20a, 20b) adapted to this inner surface (7a, 7b), wherein subsequent to a processing step for fabricating the dental prosthesis (7), measurement data (7') of the processed dental prosthesis (7) for fabrication that is positioned in the holding device are recorded with a three-dimensional measuring device (2) and are depicted on a display (4) together with the design data (17, 17', 17''), wherein at least one reference surface (13) is provided on the holding device (6) or on the dental prosthesis (7), and its relative position to the contact points or surfaces of the dental prosthesis (7a, 7b) is known, and the measurement data (7') are correlated with the design data (17, 17', 17'') by means of the reference surfaces (13).

2. The method according to claim 1, **characterized in that** the measurement data (7') and the design data (17, 17', 17'') are correlated with each other, and differences between the measurement data (7') and the design data (17, 17', 17'') are displayed on the display (4).

3. The method according to one of claims 1 to 2, **characterized in that** the 3D data set of the dental situation (14), the design data (17, 17', 17'') and the measurement data (7') are correlated with each other, and these data are displayed on the display (4).

4. The method according to claim 3, **characterized in that** the 3D data set of the dental situation (14) also comprises the opposing jaw (14'), wherein both jaws (14', 14'') can be moved relative to each other by means of a software articulator that is loaded onto and running on a computing unit (3).

5. The method according to one of claims 1 to 4, **characterized in that** the 3D data set of the dental situation (14) is generated by means of three-dimensional intraoral measurement, or by means of three-dimensional measurement of an impression or a model.

6. The method according to one of claims 1 to 5, **characterized in that** the 3D data set of the dental situation (14) and/or the design data (17, 17', 17'') are provided by telecommunication means.

7. The method according to one of claims 1 to 6, **characterized in that** the dental prosthesis (7) is multi-part, wherein one of the parts is a framework (7.1) that is constructed and produced by means of CAD/CAM methods.

8. The method according to claim 7, **characterized in that** at least one inner surface (7a, 7b) of the framework (7.1) constitutes a contact point or contact surface, and that the holding device (6) has a contact surface (20a, 20b) adapted to this inner surface (7a, 7b).

9. The method for fabricating a dental prosthesis (7), wherein the dental prosthesis (7) comprises a framework (7.1) and an abutment, wherein a 3D data set of a dental situation (14) of a patient is available, and measurement data (7') of the framework (7.1) or the dental prosthesis (7) at least partially built up thereupon are recorded with a three-dimensional measuring device (2), wherein inner surfaces (7a, 7b) are provided in the design of the framework (7.1) that enable a specific positioning of the framework (7.1) in a holding device (6) of the measuring device, wherein the measurement data (7') and the 3D data set of the dental situation (14) are depicted on a display (4), and wherein at least one reference surface (13) is provided on the holding device (6), or on the dental prosthesis (7), or on the framework (7.1), and its position relative to the inner surfaces of the framework (7a, 7b) is known, wherein the measurement data (7') are correlated with the data set of the dental situation (14) by means of the reference surface (13).

10. The method according to claim 9, **characterized in that** the framework (7.1) is designed and produced by means of CAD/CAM methods on the basis of the 3D data set of the dental situation (14).

11. The method according to claim 9 or 10, **characterized in that** the measurement data (7') are correlated with the 3D data set of the dental situation (14) in terms of correct size and position.

12. The method according to one of claims 9 to 11, **characterized in that** the depiction on the display (4) is graphic.

13. A device for partially manually processing a dental prosthesis (7), wherein the device (1) comprises a three-dimensional measuring device (2) for generating measurement data (7') of the dental prosthesis (7) to be processed, and a computing unit (3) and a display (4), wherein the computing unit (3) has a first storage sector for storing a first three-dimensional data set (14, 17, 17', 17") and a second storage sector for storing the measurement data (7'), wherein the computing unit (3) is connected to the display (4) for displaying the two data sets (14, 17, 17', 17''), and the computing unit (3) has means for correlating and comparing the two data sets (14, 17, 17', 17''), and furthermore has means for graphically preparing the data determined by the comparison, wherein a holding device (6) is provided, on which the dental prosthesis (7) can be securely positioned, wherein the holding device (6) has one or more reference surfaces (13) for determining the shape and position of the dental prosthesis (7) with reference to its inner surfaces (7a, 7b), and wherein the holding device (6) has contact surfaces (20a, 20b, 21a) that form a fit with the inner surface (7a, 7b) of the dental prosthesis (7).

14. The device according to claim 13, **characterized in that** the device comprises a computer-supported production unit (12) for fabricating a part of the dental prosthesis (7).

15. The device according to claim 13 or 14, **characterized in that** the first 3D data set is a 3D data set of the dental situation (14) of the patient's mouth.

16. The device according to claim 13 or 14, **characterized in that** the first 3D data set consists of design data (17, 17', 17'') of the dental prosthesis (7) to be produced.

17. The device according to claim 16, **characterized in that** the computing unit (3) comprises a third storage sector for storing design data (17, 17', 17'') of the dental prosthesis (7) to be fabricated, wherein all three data sets (7', 14, 17, 17', 17'') are displayed on the display (4).

18. The device according to claim 16, **characterized in that** the data set of the dental situation (14) also comprises an opposing jaw (14'), and that a software articulator is stored and loadable on the computing unit (3) for calculating the relative movement of the two jaws (14', 14''), wherein the graphic preparation means prepare this relative movement for depiction on the display (4).

19. The device for partially manually processing a dental prosthesis (7), wherein the device (1) comprises a three-dimensional measuring device (2) for generating measurement data (7') of the dental prosthesis (7) to be processed, and a computing unit (3) and a display (4), wherein the computing unit (3) has a first storage sector for storing a first three-dimensional data set (14, 17, 17', 17''), and a second storage sector for storing the measurement data (7'), wherein the computing unit (3) is connected to the display (4) for displaying the two data sets (7', 14, 17, 17', 17''), wherein furthermore a holding device (6) is provided, on which the dental prosthesis (7) is securely positioned, wherein the holding device (6) has one or more reference surfaces (13) for determining the shape and position of the dental prosthesis (7) with reference to its inner surfaces (7a, 7b), and wherein the holding device (6) has a cast of the inner surface (7a, 7b) of the dental prosthesis (7) consisting of a hardenable material, preferably plaster.

20. The device according to claim 19, **characterized in that** the device (1) comprises a computer-supported production unit (12) for fabricating a framework.

21. The device according to one of claims 19 to 20, **characterized in that** the first 3D data set is a 3D data set of the dental situation (14) of the patient's mouth.

22. The device according to one of claims 19 to 21, **characterized in that** the first 3D data set consists of design data (17, 17', 17") of the dental prosthesis to be fabricated.

23. The device according to claim 21, **characterized in that** the computing unit (3) comprises a third storage sector for storing design data (17, 17', 17'') of the dental prosthesis to be fabricated, wherein all three data sets (7', 14, 17, 17', 17'') are displayed on the display (4).

24. The device according to claim 21, **characterized in that** the data set of the dental situation (14) also comprises an opposing jaw (14'), and that a software articulator is stored and loadable on the computing unit (3) for calculating the relative movement of the two jaws (14', 14''), wherein the graphic preparation means prepare this relative movement for depiction on the display (4).

## Revendications

1. Procédé de fabrication d'une prothèse dentaire (7), où la prothèse dentaire (7) est traitée manuellement ; des données de construction (17, 17', 17'') de la prothèse dentaire (7) à fabriquer sont disponibles ; elles indiquent que, lors de la construction de la prothèse dentaire (7), une surface intérieure (7a, 7b) est prévue, permettant un positionnement net de la prothèse dentaire dans un dispositif de support (6) d'un système de mesurage (2), le dispositif de support (6) comportant une surface d'appui (20a, 20b) adaptée à cette surface intérieure (7a, 7b), dans lequel, après une étape de traitement pour la fabrication de la prothèse dentaire (7), des données de mesurage (7') de la prothèse dentaire (7) à fabriquer, traitée et positionnée dans le dispositif de support sont enregistrées via un système de mesurage tridimensionnel (2) et représentées conjointement avec les données de construction (17, 17', 17''), sur un écran (4) ; au moins une surface de référence (13) étant prévue sur le dispositif de support (6) ou sur la prothèse dentaire (7), dont la position relative par rapport aux points ou surfaces d'appui de la prothèse dentaire (7a, 7b) est connue ; les données de mesurage (7') sont mises en relation avec les données de construction (17, 17', 17'') au moyen des surfaces de référence (13).

2. Procédé selon la revendication 1, **caractérisé en ce que** les données de mesurage (7') et les données de construction (17, 17', 17") sont mises en relation les unes avec les autres et les différences entre les données de mesurage (7') et les données de construction (17, 17', 17'') sont affichées à l'écran (4).

3. Procédé selon l'une des revendications 1 à 2, **caractérisé en ce que** l'enregistrement de données 3D de la situation dentaire (14), les données de construction (17, 17', 17") et les données de mesurage (7') sont mis en relation les uns avec les autres et ces données sont affichées à l'écran (4).

4. Procédé selon la revendication 3, **caractérisé en ce que** l'enregistrement de données 3D de la situation dentaire (14) comprend également la mâchoire opposée (14'), les deux mâchoires (14', 14'') pouvant être déplacées l'une par rapport à l'autre au moyen d'un articulateur logiciel chargé et exécuté sur une unité de calcul (3).

5. Procédé selon l'une des revendications 1 à 4, **caractérisé en ce que** l'enregistrement de données 3D de la situation dentaire (14) est généré au moyen d'un mesurage intrabuccal tridimensionnel ou au moyen d'un mesurage tridimensionnel d'une empreinte ou d'un modèle.

6. Procédé selon l'une des revendications 1 à 5, **caractérisé en ce que** l'enregistrement de données 3D de la situation dentaire (14) et/ou les données de construction (17, 17', 17'') sont mis à disposition via des moyens de communication à distance.

7. Procédé selon l'une des revendications 1 à 6, **caractérisé en ce que** la prothèse dentaire (7) est constituée de plusieurs parties, l'une des parties étant un châssis (7.1), construit et fabriqué au moyen de procédés de CAO/FAO.

8. Procédé selon la revendication 7, **caractérisé en ce qu'**au moins une surface intérieure (7a, 7b) du châssis (7.1) représente un point d'appui ou une surface d'appui et **en ce que** le dispositif de support (6) comporte une surface d'appui (20a, 20b) adaptée à cette surface intérieure (7a, 7b).

9. Procédé de fabrication d'une prothèse dentaire (7), où la prothèse dentaire (7) comprend un châssis (7.1) et un corps, un ensemble de données 3D d'une situation dentaire (14) d'un patient étant à disposition et en ce que des données de mesurage (7') du châssis (7.1) ou de la prothèse dentaire (7) au moins en partie montée sur celui-ci sont enregistrées via un système de mesurage tridimensionnel (2), dans lequel, lors de la construction du châssis (7.1), des surfaces intérieures (7a, 7b) sont prévues, permettant un positionnement net du châssis (7.1) dans un dispositif de support (6) du système de mesurage, les données de mesurage (7') et l'enregistrement de données 3D de la situation dentaire (14) étant représentés sur un écran (4) et au moins une surface de référence (13), dont la position par rapport aux surfaces intérieures du châssis (7a, 7b) est connue, prévue sur le dispositif de support (6) ou sur la prothèse dentaire (7) ou sur le châssis (7.1), les données de mesurage (7') étant mises en relation avec l'enregistrement de données de la situation dentaire (14) au moyen de la surface de référence (13).

10. Procédé selon la revendication 9, **caractérisé en ce que** le châssis (7.1) est construit et fabriqué sur la base de l'enregistrement de données 3D de la situation dentaire (14) au moyen de procédés de CAO/FAO.

11. Procédé selon la revendication 9 ou 10, **caractérisé en ce que** les données de mesurage (7') sont mises en relation avec l'enregistrement de données 3D de la situation dentaire (14) de manière concordante en termes de dimension et de position.

12. Procédé selon l'une des revendications 9 à 11, **caractérisé en ce que** la représentation à l'écran (4) est graphique.

13. Dispositif de traitement en partie manuel d'une prothèse dentaire (7), où le dispositif (1) comprend un système de mesurage tridimensionnel (2) destiné à générer des données de mesurage (7') de la prothèse dentaire (7) à traiter, ainsi qu'une unité de calcul (3) et un écran (4), l'unité de calcul (3) comportant un premier espace de mémoire destiné à stocker un premier enregistrement de données tridimensionnelles (14, 17, 17', 17'') et un deuxième espace de mémoire destiné à stocker les données de mesurage (7'), l'unité de calcul (3) étant reliée à l'écran (4) pour l'affichage des deux enregistrements de données (14, 17, 17', 17'') et en ce que l'unité de calcul (3) comporte des moyens de mise en relation et de comparaison des deux enregistrements de données (14, 17, 17', 17'') et en outre des moyens de traitement graphique des données déterminées par la comparaison, un dispositif de support (6) étant prévu, sur lequel la prothèse dentaire (7) peut être positionnée de manière fixe ; le dispositif de support (6) comportant une ou plusieurs surfaces de référence (13) permettant de déterminer la forme et la position de la prothèse dentaire (7), en ce qui concerne ses surfaces intérieures (7a, 7b) et le dispositif de support (6) comportant des surfaces d'appui (20a, 20b, 21a), qui forment une adaptation à la surface intérieure (7a, 7b) de la prothèse dentaire (7).

14. Dispositif selon la revendication 13, **caractérisé en ce que** le dispositif comprend une unité de fabrication assistée par ordinateur (12), destinée à fabriquer une partie de la prothèse dentaire (7).

15. Dispositif selon la revendication 13 ou 14, **caractérisé en ce que** le premier enregistrement de données 3D est un enregistrement 3D de la situation dentaire (14) de la bouche du patient.

16. Dispositif selon la revendication 13 ou 14, **caractérisé en ce que** le premier enregistrement de données 3D se compose de données de construction (17, 17', 17'') de la prothèse dentaire (7) à fabriquer.

17. Dispositif selon la revendication 16', **caractérisé en ce que** l'unité de calcul (3) comprend un troisième espace de mémoire destiné à stocker des données de construction (17, 17', 17'') de la prothèse dentaire (7) à fabriquer, les trois enregistrements de données (7', 14, 17, 17', 17'') étant affichés à l'écran (4).

18. Dispositif selon la revendication 16', **caractérisé en ce que** le jeu de données de la situation dentaire (14) comprend également une mâchoire opposée (14') et **en ce qu'**un articulateur logiciel peut être stocké et chargé sur l'unité de calcul (3) pour déterminer le mouvement relatif des deux mâchoires (14', 14"), les moyens de traitement graphique analysant ce mouvement relatif pour la représentation à l'écran (4).

19. Dispositif de traitement en partie manuel d'une prothèse dentaire (7), où le dispositif (1) comprend un système de mesurage tridimensionnel (2) destiné à générer des données de mesurage (7') de la prothèse dentaire (7) à traiter ainsi qu'une unité de calcul (3) et un écran (4), l'unité de calcul (3) comportant un premier espace de mémoire destiné à stocker un premier enregistrement de données tridimensionnelles (14, 17, 17', 17'') et un deuxième espace de mémoire destiné à stocker les données de mesurage (7'), l'unité de calcul (3) étant reliée à l'écran (4) pour l'affichage des deux enregistrements de données (7', 14, 17, 17', 17''), un dispositif de support (6) étant en outre prévu, sur lequel la prothèse dentaire (7) peut être positionnée de manière fixe, le dispositif de support (6) comportant une ou plusieurs surfaces de référence (13) destinées à déterminer la forme et la position de la prothèse dentaire (7) en ce qui concerne ses surfaces intérieures (7a, 7b), le dispositif de support (6) comportant un moulage de la surface intérieure (7a, 7b) de la prothèse dentaire (7) en un matériau durcissable, de préférence du gypse.

20. Dispositif selon la revendication 19', **caractérisé en ce que** le dispositif (1) comprend une unité de fabrication assistée par ordinateur (12) destinée à fabriquer un châssis.

21. Dispositif selon l'une des revendications 19 à 20', **caractérisé en ce que** le premier enregistrement de données 3D est un enregistrement 3D de la situation dentaire de la bouche du patient (14).

22. Dispositif selon l'une des revendications 19 à 21', **caractérisé en ce que** le premier enregistrement de données 3D se compose de données de construction de la prothèse dentaire (17, 17', 17'') à fabriquer.

23. Dispositif selon la revendication 21', **caractérisé en ce que** l'unité de calcul (3) comprend un troisième espace de mémoire destiné à stocker des données de construction de la prothèse dentaire (17, 17', 17'') à fabriquer, les trois enregistrements de données (7', 14, 17, 17', 17'') étant affichés à l'écran (4).

24. Procédé selon la revendication 21', **caractérisé en ce que** l'enregistrement de données de la situation dentaire (14) comprend également une mâchoire opposée (14') et **en ce qu'**un articulateur logiciel peut être stocké et chargé sur l'unité de calcul (3) pour déterminer le mouvement relatif des deux mâchoires (14', 14''), les moyens de traitement graphique traitant ce mouvement relatif pour la représentation à l'écran (4).
